# FASCICULE DE BREVET EUROPEEN

(11) **EP 0 447 911 B1**
(45) Date de publication et mention de la délivrance du brevet: **11.01.1995**
(21) Numéro de dépôt: 91103674.7
(22) Date de dépôt: 11.03.1991
(51) Int. Cl.: G02B 6/44, B05D 7/20, B41F 17/10, C03C 25/02

(54) **Procédé et dispositif de marquage de fibres optiques**
Verfahren und Vorrichtung zum Markieren optischer Fasern
Process and device for marking optical fibres

(30) Priorité: 15.03.1990 FR 9003334
(43) Date de publication de la demande: 25.09.1991
(73) Titulaire: ALCATEL CABLE, 92111 Clichy Cédex (FR)
(72) Inventeur: Freychet, Claude, F-78360 Montesson (FR); Tauleygne, Alain, F-95130 Franconville (FR)
(74) Mandataire: Weinmiller, Jürgen

(56) Documents cités:
- DE-A- 3 637 159
- GB-A- 1 536 178
- GB-A- 2 142 280
- US-A- 4 503 437
- US-A- 4 619 842

## Description

La présente invention concerne un procédé de marquage de fibres optiques en cours d'avance longitudinale continue en nappe avant leur insertion dans une enveloppe de protection, telle qu'un tube ou les rainures d'un jonc. Elle s'étend en outre à un dispositif de marquage selon ce procédé.

On a déjà proposé de marquer des fibres optiques en les faisant passer individuellement dans un bain d'encre d'une couleur, ceci sur une longueur déterminée de chaque fibre. Un tel procédé oblige à utiliser un bain de marquage différent pour chaque fibre optique. Il modifie parfois les caractéristiques des fibres optiques marquées.

La présente invention a pour but de procurer un procédé et un dispositif de marquage de fibres optiques qui n'agissent que sur une très courte longueur de ces fibres, qui ne nécessitent qu'un appareillage très simple, et qui soient d'un coût réduit.

L'invention comporte un procédé selon la revendication 1, et un dispositif selon la revendication 3.

Dans le procédé selon l'invention, l'on projette en continu un jet d'encre unique sur ladite nappe en avance longitudinale continue, suivant un plan coupant la totalité des fibres tout en imprimant audit jet un mouvement alternatif continu allant d'au moins d'une fibre extrême à l'autre.

Le dispositif de marquage selon ce procédé, comportant au moins une tête de projection d'un jet d'encre, comprend une tête unique de projection en continu du jet d'encre, selon une direction coupant le plan de ladite nappe de fibres en avance longitudinale continue, en regard de ladite tête, ladite tête étant animée d'un mouvement alternatif continu, pour lequel ledit jet se déplace d'au moins une fibre extrême à l'autre de ladite nappe.

Il est décrit ci-après, à titre d'exemple et en référence aux figures du dessin annexé, un procédé et un dispositif selon l'invention.

La figure 1 représente une nappe de fibres optiques et le mouvement alternatif d'une tête de marquage perpendiculairement à leur direction d'avance.

La figure 2 représente les marques imprimées sur les fibres optiques en aval de la tête de marquage.

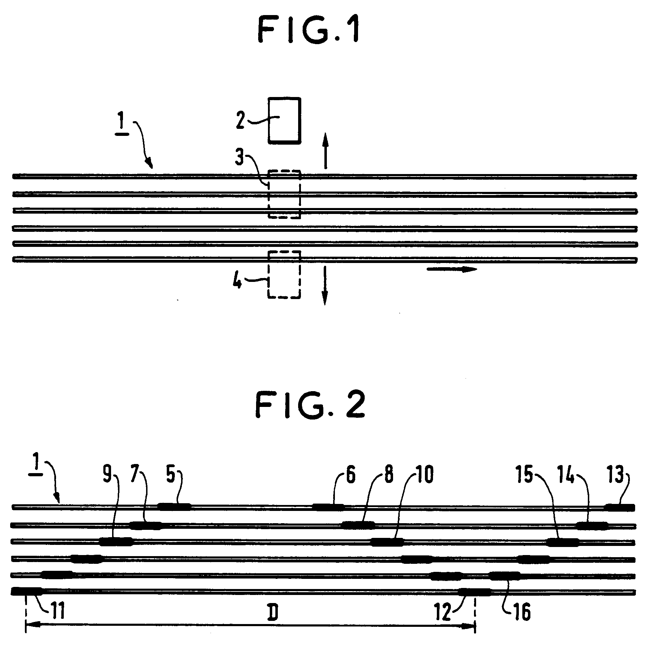

Dans la figure 1, la nappe de fibres optiques 1 défile en continu de la gauche vers la droite de la figure. Au-dessus de celle-ci, une tête de marquage 2 à jet d'encre dirigé vers le bas subit un déplacement alternatif au-dessus de la nappe de fibres, dans un plan perpendiculaire à leur direction d'avance. Elle prend notamment des positions telles que celles représentées en trait interrompu 3, 4.

La figure 2 représente schématiquement les marques imprimées sur les fibres optiques, telles que 5, 6 sur la fibre extrême gauche, 7, 8 sur la fibre suivante, 9, 10 sur la suivante, etc... jusqu'à 11, 12 sur la fibre extrême droite. Les marques de 11 à 5 ont été imprimées au cours du déplacement de la tête de marquage du bas vers le haut de la figure 1, et les marques de 6 à 12 au cours de son déplacement du haut vers le bas. La tête de marquage, en remontant vers le haut de la figure 1, avait imprimé auparavant les marques 16 à 13 sur les fibres optiques. On a admis que la tête de marquage s'écartait suffisamment de la fibre optique extrême gauche de la figure 1 pour y imprimer deux marques 5, 6 au cours d'un mouvement alternatif et que son jet d'encre ne dépassait pas la verticale de la fibre optique extrême droite, de sorte que cette dernière ne recevait qu'une seule marque par jet d'encre 11 ou 12 par allée et venue de la tête de marquage, mais il pourrait en être différemment.

On voit que le marquage des fibres optiques s'effectue avec le pas D représenté en figure 2. Les marques sur toutes les fibres optiques sont d'écartements différents ce qui permet de les repérer sans ambiguïté dans toute la suite de leur progression.

## Revendications

1. Procédé de marquage de fibres optiques disposées en une nappe en cours d'avance longitudinale continue avant leur insertion dans une enveloppe de protection, caractérisé en ce que l'on projette en continu un jet d'encre unique sur les fibres de ladite nappe en avance longitudinale continue, suivant un plan coupant la totalité des fibres, tout en imprimant audit jet un mouvement alternatif continu allant d'au moins d'une fibre extrême à l'autre.

2. Procédé selon la revendication 1, caractérisé en ce que la projection du jet d'encre s'effectue dans un plan perpendiculaire à la direction d'avance des fibres.

3. Dispositif de marquage de fibres optiques selon le procédé de la revendication 1, comportant au moins une tête de projection d'un jet d'encre caractérisé en ce qu'il comprend une tête unique (2) de projection en continu du jet d'encre, selon une direction coupant le plan de ladite nappe de fibres (1), des moyens pour imprimer un mouvement d'avance longitudinale continue auxdites fibres en regard de ladite tête, et des moyens pour imprimer à ladite tête un mouvement alternatif continu, de sorte que ledit jet se déplace d'au moins une fibre extrême à l'autre de ladite nappe.

4. Dispositif selon la revendication 3, caractérisé en ce que la tête de projection (2) se déplace dans un plan perpendiculaire à la direction d'avance des fibres.

## Patentansprüche

1. Verfahren zur Markierung von in einer kontinuierlich in Längsrichtung bewegten Schicht angeordneten Lichtleitfasern, ehe sie in eine Schutzhülle eingeführt werden, dadurch gekennzeichnet, daß ein einziger Tintenstrahl kontinuierlich auf die Fasern der in kontinuierlicher Längsbewegung befindlichen Schicht gemäß einer die Gesamtheit der Fasern schneidenden Ebene gerichtet wird und dabei der Strahl einer kontinuierlichen Wechselbewegung unterworfen wird, die mindestens von einer äußersten Faser zur anderen reicht.

2. Verfahren nach Anspruch 1, dadurch gekennzeichnet, daß der Tintenstrahl in einer Ebene senkrecht zur Vorschubrichtung der Fasern ausgerichtet ist.

3. Vorrichtung zur Markierung von Lichtleitfasern gemäß dem Verfahren aus Anspruch 1 mit mindestens einem Tintenstrahlkopf, dadurch gekennzeichnet, daß sie einen einzigen Tintenstrahlkopf (2), der kontinuierlich einen Tintenstrahl in einer die Ebene der Schicht von Lichtleitfasern (1) schneidenden Richtung erzeugt, Mittel, um die Fasern vor dem Kopf in eine kontinuierliche Längsbewegung zu versetzen, und Mittel aufweist, um den Kopf in eine kontinuierliche Wechselbewegung derart zu versetzen, daß sich der Strahl zumindest von einer äußersten Faser der Schicht zur anderen verschiebt.

4. Vorrichtung nach Anspruch 3, dadurch gekennzeichnet, daß der Tintenstrahlkopf (2) sich in einer Ebene senkrecht zur Vorschubrichtung der Fasern verschiebt.

## Claims

1. Method of marking optical fibres in a flat bundle as they move continuously lengthwise prior to insertion into a protective envelope characterised in that a single ink jet is sprayed continuously onto the fibres of said flat bundle as it moves continuously lengthwise and in a plane intersecting all the fibres, said jets being continuously reciprocated from at least one extreme fibre to the other.

2. Method according to claim 1 characterised in that the ink jet is sprayed in a plane perpendicular to the direction of forward movement of the fibres.

3. Device for marking optical fibres by the method of claim 1 including at least one ink jet spray head characterised in that it comprises a single head (2) for spraying a continuous ink jet in a direction intersecting the plane of said flat bundle of optical fibres (1), means for moving said fibres continuously lengthwise past said head and means for continuously reciprocating said head so that said jet moves from at least one extreme fibre of said flat bundle to the other.

4. Device according to claim 3 characterised in that the spray head (2) moves in a plane perpendicular to the direction of forward movement of the fibres.
